# EUROPEAN PATENT APPLICATION

(11) **EP 3 188 065 A1**
(43) Date of publication of application: **05.07.2017**
(21) Application number: 15835541.2
(22) Date of filing: 23.07.2015
(51) Int. Cl.: G06F 21/55

(54) **SECURE INTELLIGENT TERMINAL DEVICE AND INFORMATION PROCESSING METHOD**

(30) Priority: 28.08.2014 CN 201410432899
(71) Applicant: Beijing Watchsmart Technologies Co., Ltd, Chaoyang District Beijing 100102 (CN)
(72) Inventor: YE, Xin, Beijing 100102 (CN); ZHANG, Tianqi, Beijing 100102 (CN)
(74) Representative: Global IP Europe Patentanwaltskanzlei
(86) International application number: PCT/CN2015/084871
(87) International publication number: WO 2016/029761

(57) **Abstract**

Embodiments of the invention disclose a secure smart terminal and an information processing method. The terminal includes a first operating system which is installed in the terminal, for processing sensitive logic, a secure storage module and a secure processing module wherein the secure storage module is for storing sensitive logic of the first operating system and an application and the secure processing module is for switching a current operating system into the first operating system and processing the sensitive logic in the first operating system in case that any sensitive logic is invoked in the secure storage module. The first operating system in the invention is of functions of protecting security of information of a user and preventing invasion of a vicious software. Therefore, security of information of a user can be improved with the terminal provided by the invention.

## Description

### TECHNICAL FIELD OF THE INVENTION

The invention relates to the data processing technology field and particularly relates to a secure smart terminal and an information processing method.

### PRIOR ART OF THE INVENTION

With enhancement in computer technology and increase in demand of a user, more kinds of applications are developed. In an environment where a secure smart terminal is glutted with vicious software such as Trojan, how to effectively prevent normal operation of an application from being interrupted by a vicious software is paid more attention by people. Especially for those applications relating to information security, it is a must for preventing intervention of a vicious software.

Taking application "12306" on client side of a mobile phone, for example, it is more urgent to prevent invasion of a vicious software because payment step of the application involves security of information of a user. In fact, the payment step of the application is completed by jumping from inside of the application "12306" to webpages of various payment channels. However, operating system of a mobile phone is installed in an open environment, such as Android system, therefore it is difficult to prevent information of a user from being intercepted by a vicious software. As a result, account number and password of a user can be intercepted by a vicious software which makes information of a user unsafe.

### SUMMARY OF THE INVENTION

A secure smart terminal and an information processing method are provided in the invention which ensure security of information of a user.

The invention provides a secure smart terminal wherein the terminal is installed with a first operating system for processing sensitive logic and the terminal includes a secure storage module and a secure processing module in which the secure storage module is for storing the sensitive logic of the first operating system and an application and the secure processing module is for switching a current operating system into the first operating system and processing the sensitive logic in the first operating system in case that any sensitive logic in the secure storage module is invoked.

Preferably, the terminal further includes a secure input/output module, an input component and an output component in which the secure input/output module is for receiving input information from the input component and/or sending output information to the output component in case that the secure processing module processes the sensitive logic.

Preferably, the input component comprises one or more of these components: an SAM (security application module) reader slot, a contactless reader, a magnet reader, a contact reader and an eSE embedded security module.

Preferably, the terminal includes a contactless card-reading indicator for sending an indicating signal in case that the contactless reader reads input information.

Preferably, the terminal includes a security indicating module for informing a security indicator of sending an indicating signal in case that any sensitive logic in the secure storage module is invoked.

Preferably, the security indicator is an indicator of trusted execution environment.

Preferably, the security indicating module is a general IO port being controlled by the first operating system.

Preferably, the secure storage module is an embedded non-volatile storage system.

Preferably, the terminal includes a secure clock module for providing timing for the first operating system.

The invention further provides an information processing method which is applied in the above-mentioned secure smart terminal and includes steps of a secure storage module storing sensitive logic of the first operating system and an application and in case that any sensitive logic in the secure storage module is invoked, the security processing module switching a current operating system into the first operating system and processing the sensitive logic in the first operating system.

Preferably, the terminal includes a secure input/output module, an input component and an output component and correspondingly the method include a step of the secure input/output module receiving input information from the input component and/or sending output information to the output component.

Preferably, the terminal includes a security indicating module and correspondingly the method includes a step of the security indicating module informing a security indicator of sending an indicating signal in case that any sensitive logic in the secure storage module is invoked.

Preferably, the terminal includes a secure clock module and correspondingly the method includes a step of the secure clock module providing timing for the secure operating system.

In the secure smart terminal and the information processing method provided by the invention, the terminal is installed with a first operating system for processing sensitive logic and in case that any sensitive logic is invoked, a secure processing module of the terminal switches a current operating system into the first operating system and processes the sensitive logic in the first operating system. The first operating system is of function of ensuring security of information of a user and preventing the information of a user from invasion by a vicious software. Therefore, the terminal provided by the invention can improve security of information of a user.

### DESCRIPTION OF ACCOMPANYING DRAWINGS OF THE INVENTION

For clarifying technical solution in embodiments of the invention, a simple introduction will be made of the drawings being described in the embodiments. Obviously, the drawings described below are just part of embodiments of the application and a person of ordinary skill in the art can obtain other drawings according to the given drawings without making any inventive efforts.
Figure 1 is a structural diagram of a secure smart terminal provided in Embodiment 1 of the invention;
Figure 2 is a flow chart of an information processing method provided in Embodiment 2 of the invention; and
Figure 3 is an interaction diagram of an information processing method in a tool purchasing process of a cyber game provided in Embodiment 2 of the invention.

### EMBODIMENTS

A clear and complete description will be given to the technical solution in embodiments of the invention in accompanying with drawings of the embodiments. Obviously, the embodiments being described are just part of embodiments of the invention, not all of them. All other embodiments obtained by a person of ordinary skill in the art without making any inventive effort should fall within the scope of protection of the invention.

At present, various kinds of applications are increasingly involved with security of information of a user, for example, sensitive operation like inputting a password of account by a user. Operating system in the present terminal itself is of weakness in preventing information of a user from being intercepted by a vicious software in a process of a sensitive operation and thus security of information of a user cannot be ensured. The terminal provided by the embodiment of the invention is installed with a secure operating system for processing sensitive logic which prevents information of a user from being intercepted by a vicious software in the process of running sensitive logic and therefore ensures security of information of a user.

### Embodiment 1

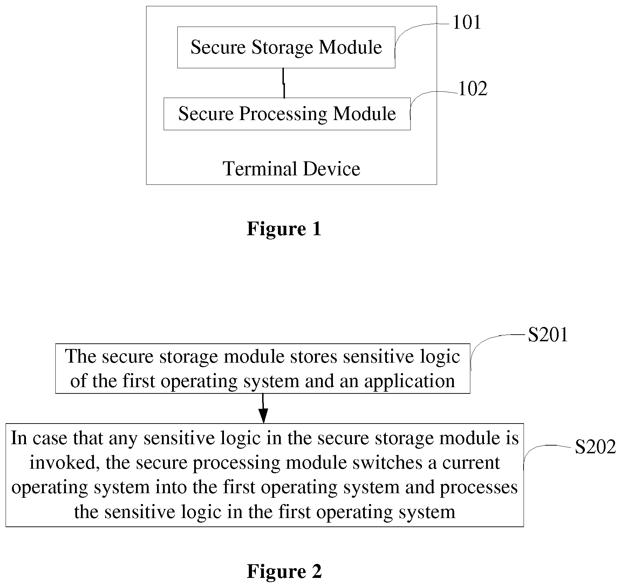

As illustrated in Figure 1, a structural diagram of a secure smart terminal provided by the embodiment, the terminal is installed with a first operating system in which the first operating system is for processing sensitive logic and includes a secure storage module 101 and a secure processing module 102.

In the embodiment, the secure smart terminal can be a smart phone, a pad or the like. Sensitive logic in an application refers to processing logic relating to security of information of a user, for example, inputting a password and confirming a transfer account and amount.

The secure smart terminal provided by the embodiment is installed with a first operating system which is a secure operating system, namely Secure OS, different from an operating system generally installed in a terminal, such as an open-source system like Android. Running sensitive logic of an application in the Secure OS can prevent invasion of a vicious software and ensure security of information of a user.

In general, the terminal of the embodiment is installed with two or more operating systems which include a first operating system for executing sensitive logic and a general operating system for executing non-sensitive logic which is also called a second operating system, such as an open-source system like Android. In case that the terminal runs any application, operation of a non-sensitive logic is executed in the second operating system while in case that the sensitive logic in the application is executed, a current operating system is switched into the first operating system and the sensitive logic is operated in the first operating system to ensure security of information of a user.

In practice, in case that operation of the sensitive logic is run in the first operating system, it is isolated completely from the second operating system which means that operation of the sensitive logic in the application is executed in the first operating system completely.

In the embodiment, it is noted that the secure operating system is of a privilege of controlling a hardware system which is set up by a security strategy in order to prevent the secure operating system from invasion of a vicious software in a normal operating system. Specifically, the secure operating system can be started firstly and other operating system be started secondly in order to ensure a privilege of the secure operating system of controlling hardware system at a time when the terminal is started. Moreover, in order to prevent the secure operating system from being tampered by a vicious software, Secure Bootloader can be executed at a time when the secure operating system is started in the embodiment.

In the embodiment, the terminal includes a secure storage module 101 and a secure processing module 102. The secure storage module 101 is for storing sensitive logic of the first operating system and an application. The secure processing module 102 is for switching a current operating system into the first operating system and processing the sensitive logic in the first operating system in case that any sensitive logic in the secure storage module 101 is invoked.

In the embodiment, an application being installed by the terminal is realized by both sensitive logic and non-sensitive logic. The sensitive logic and the non-sensitive logic are separately stored in different locations of the terminal wherein the sensitive logic is stored in the secure storage module. In case that any sensitive logic in the secure storage module 101 is invoked, the secure processing module 102 of the terminal switches a current operating system into the first operating system and processes the sensitive logic in the first operating system. Specifically, in case that the secure processing module 102 switches the operating system, operations in original operating system, namely the second operating system, are suspended while operations in the first operating system are started. In brief, the sensitive logic is processed in the first operating system.

In practice, the secure storage module 101 can store sensitive logic of an application which is also named TA application, in a hardware of a specified embedded non-volatile storage system eMMC Flash and it can also store the first operating system which refers to system program such as Secure OS relating to security of information of a user. Moreover, function of the secure processing module 102 can be accomplished by a CPU processor. Specifically, the CPU processor can invoke data in the secure storage module, read, write and transfer data to complete operation and processing which is required by the sensitive logic.

In the embodiment, the terminal can further include a secure input/output module, an input component and an output component. Specifically, the secure input/output module is for receiving input information from the input component in case that the secure processing module processes the sensitive logic and also for sending output information to the output component.

In practice, when processing the sensitive logic, the secure processing module receives information, such as account number, password and like, being input by a user. The above user information can be input by a touch screen, a camera, a biometric sensor and a microphone, or input by one or more of these input components: an SAM (security application module) card-reading slot, a contactless reader, a magnet reader, a contact reader, an eSE embedded security module.

Moreover, in case that a contactless reader reads information of a user, the user cannot make sure whether information of a user is read completely. Therefore, the terminal in the embodiment can include a contactless card-reading indicator for sending an indicating signal for indicating that the contactless reader completes reading information of the user in case that the contactless reader reads information of the user.

In order to alarm a user that current operating system of the terminal is the first operating system, the terminal in the embodiment can include a security indicating module for prompting a security indicator of sending an indicating signal in case that any sensitive logic in the secure storage module is invoked. The security indicator can be an indicator of trusted executable environment, such as a LED light, a buzzer or the like. The security indicating module may be a general IO port being controlled by the first operating system.

Moreover, the terminal in the embodiment can further include a secure clock module for timing for the first operating system, which is not controlled by the second operating system to ensure normal and secure operation of the application taking time as key information. Specifically, the secure clock module may be an independent RTC clock hardware.

In the embodiment, the secure smart terminal is installed with a first operating system for processing sensitive logic and in case that any sensitive logic is invoked, secure processing module of the terminal switches a current operating system into the first operating system and processes the sensitive logic in the first operating system. The first operating system is of a function of protecting security of information of a user and preventing invasion of a vicious software. Therefore, the terminal provided in the invention can improve security of information of a user.

### Embodiment 2

As illustrated in Figure 2, a flow chart of an information processing method provided by the embodiment, the method can be applied in the smart security terminal being disclosed by Embodiment 1. The terminal is installed with a first operating system for processing sensitive logic and includes a secure storage module and a secure processing module. The secure smart terminal can be a smart phone, a pad and so on. The method includes steps as below.

In Step S201, the secure storage module is for storing sensitive logic of the first operating system and an application.

The sensitive logic of the application includes a processing logic relating to security of information of a user. In case that the terminal is installed with the application, the sensitive logic in the application is stored in the secure storage module of the terminal. Moreover, in case that the terminal is installed with the first operating system, the first operating system can be stored in the secure storage module and it is a secure operating system for processing sensitive logic.

In Step S202, in case that any sensitive logic is invoked in the secure storage module, the secure processing module switches a current operating system into the first operating system and processes sensitive logic in the first operating system.

In the embodiment, the secure storage module in the secure smart terminal stores sensitive logic of the first operating system and an application. In case that any application being installed by the terminal runs and sensitive logic in the application is invoked, the secure processing module switches a current operating system into the first operating system and processes the sensitive logic in the first operating system. In another word, in order to ensure security of information of a user, the sensitive logic relating to security of information of a user is executed in the secure operating system. The sensitive logic of an application running in the secure operating system can avoid invasion of a vicious software and protect security of information of a user.

The terminal in the embodiment is installed with two or more operating systems at the same time and in case that sensitive logic is run, the terminal switches operating system into the secure operating system that is the first operating system, in order to ensure security of information of a user. In case that operation of the sensitive logic is run in the first operating system, the first operating system is completely isolated from the second operating system and hardware privilege of the terminal belongs to the first operating system.

In the embodiment, in order to prevent the secure operating system from invasion of a vicious software in a normal operating system, the secure operating system can be started firstly and other operating system is started secondly in process of starting the terminal. Moreover, in order to prevent the secure operating system from being tampered of a vicious software, Secure Bootloader can be run firstly in case of starting the secure operating system.

Further, the terminal can include a secure input/output module, an input component and an output component. Specifically, in case that the secure processing module processes the sensitive logic, the secure input/output module receives input information from the input component and sends output information to the output component.

The terminal can also include a security indicating module and specifically in case that any sensitive logic in the secure storage module is invoked, the security indicating module informs a security indicator of sending an indicating signal.

Further, the terminal can include a secure clock module which specifically provides timing for the secure operating system.

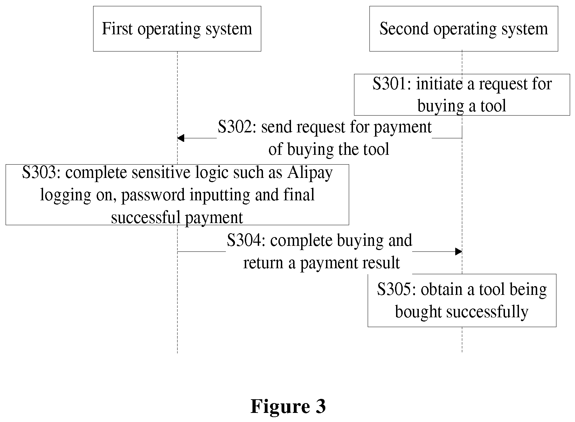

Taking a mobile phone game "Fruit Ninja" for example, in process of running the "Fruit Ninja", a user can initiate an operation request for buying a toll. As shown in Figure 3, it is an interaction diagram of an information processing method in process of buying a tool.

In practice, the terminal provided by the embodiment is installed with two operating systems which separately are a first operating system and a second operating system.

In Step S301, a user initiates a request for buying a tool in the second operating system.

The "Fruit Ninja" application includes a TrustApp (TA) and a ClientApp (CA), wherein the TA application processes a business logic relating to security of information of a user. The CA application does not relate to the business logic of security of information of a user. TA runs in a secure operating system which is the first operating system in the embodiment. TA is responsible for sensitive operation of a user such as inputting a password and confirming information such as transfer account and amount.

In Step S302, in case that a user initiates a payment request for buying the tool, a current operating system is switched from the second operating system into the first operating system.

In case that payment of the user is a sensitive logic relating to security of information of the user, it must be run in the first operating system. In order to ensure security of information of the user, the current operating system is switched into the first operating system before executing the payment in the embodiment.

In Step S303, the user completes sensitive logic such as logging on Alipay, inputting a password and final success payment.

In the embodiment, all sensitive logic such as logging on Alipay, inputting a password and final success payment, is completed in the first operating system to ensure security of information of the user.

In Step S304, when the user completes buying and returns a payment result, the current operating system is switched from the first operating system into the second operating system.

When the user completes buying and returns a payment result, sensitive logic is not involved and thus the current operating system can be switched into the second operating system and CA is run.

In Step S305, the user obtains the tool being bought successfully in the second operating system.

In the embodiment, the smart secure operating system is installed with the first operating system for processing sensitive logic and in case that any sensitive logic is invoked, the secure processing module of the terminal switches a current operating system into the first operating system and processes the sensitive logic in the first operating system. The first operating system is of function of protecting security of information of a user and preventing invasion of a vicious software. Therefore the information processing method provided in the invention can improve security of information of the user.

As for a method embodiment, it corresponds to a device embodiment as a whole and therefore corresponding description of it can be found in that of the device embodiment. The above-mentioned device embodiment is only for illustration wherein the unit being descripted as a separate part can be or not be isolated physically. The part being described as a unit can be or not be a physical unit which can be placed in one location or spread in more networking units. Part or the whole modules can be selected to meet purpose of the invention as required and a person of ordinary skill in the art should appreciate and execute it without making an inventive effort.

It is noted that terms such as "first" and "second" are only for differing from one entity or operation from another, not a requirement or implication of any practical relation or order between the entity or operation and another. Moreover, terms such as "include", "contain" or any other variable intended to cover non-exclusive elements not only include those elements, but also include other elements being not listed directly or those elements inherent with that process, method, object or device. On condition of less limits, the element being limited by sentence "including one...." is not exclusive of other element in the process, method, object or device including the listed element.

The above-mentioned is a detailed introduction of the secure smart terminal and the information processing method provided by embodiments of the invention. A single example is taken by the application for clarifying the principle and embodiments of the invention. The description of the embodiments is only for understanding the method and core thought of the invention and a person of ordinary skill in the art can make some changes on both the embodiments and scope of application based on the principle of the invention. In sum, summary of the invention should not be thought as limitation to the invention.

## Claims

1. A secure smart terminal wherein the terminal is installed with a first operating system for processing sensitive logic and the terminal comprises a secure storage module and a secure processing module wherein the secure storage module is for storing sensitive logic of the first operating system and an application; and the secure processing module is for switching a current operating system into the first operating system in case that any sensitive logic in the secure storage module is invoked and processing the sensitive logic in the first operating system.

2. The terminal of claim 1, wherein the terminal further comprises a secure input/output module, an input component and an output component; wherein
the secure input/output module is for receiving input information from the input component and/or sending output information to the output component in case that the secure processing module processes the sensitive logic.

3. The terminal of claim 2, wherein the input component comprises one or more of these components: an SAM (security application module) reader slot, a contactless reader, a magnet reader, a contact reader and an eSE embedded security module.

4. The terminal of claim 3, wherein the terminal comprises a contactless card-reading indicator for sending an indicating signal in case that the contactless reader reads input information.

5. The terminal of claim 1, wherein the terminal comprises a security indicating module for informing a security indicator of sending an indicating signal in case that any sensitive logic in the secure storage module is invoked.

6. The terminal of claim 5, wherein the security indicator is an indicator of trusted execution environment.

7. The terminal of claim 5, wherein the security indicating module is a general IO port being controlled by the first operating system.

8. The terminal of claim 1, wherein the secure storage module is an embedded non-volatile storage system.

9. The terminal of claim 1, wherein the terminal comprises a secure clock module for timing for the first operating system.

10. An information processing method, wherein the method is applied in the secure smart terminal of claim 1 and the method comprises steps of the secure storage module storing sensitive logic of the first operating system and an application; and in case that any sensitive logic in the secure storage module is invoked, the secure processing module switching a current operating system into the first operating system and processing the sensitive logic in the first operating system.

11. The method of claim 10, wherein the terminal comprises a secure input/output module, an input component and an output component and correspondingly the method comprises steps of the secure input/output module receiving input information from the input component and/or sending output information to the output component in case that the secure processing module processes the sensitive logic.

12. The method of claim 10, wherein the terminal comprises a security indicating module and correspondingly the method comprises a step of the security indicating module informing a security indicator of sending an indicating signal in case that any sensitive logic in the secure storage module is invoked.

13. The method of claim 10, wherein the terminal comprises a secure clock module and correspondingly the method comprises a step of the secure clock module providing timing for the secure operating system.
